# EUROPEAN PATENT APPLICATION

(11) **EP 2 493 101 A1**
(43) Date of publication of application: **29.08.2012**
(21) Application number: 11290102.0
(22) Date of filing: 24.02.2011
(51) Int. Cl.: H04J 14/02, H04B 10/148, H04B 10/18, H04B 10/08

(54) **Fast OMSP setup optimized for coherent detection**

(71) Applicant: Alcatel Lucent, 75007 Paris (FR)
(72) Inventor: Zami, Thierry, 91300 Massy (FR); Lavigne, Bruno, 92160 Antony (FR)
(74) Representative: MERH-IP Matias Erny Reichl Hoffmann

(57) **Abstract**

The present document relates to optical transmission systems. In particular, the present document relates to systems and methods which enable fast setup of Optical Multiplex Section Protection (OMSP) when using coherent optical detection. An optical receiver setup (650) is described. The optical receiver setup comprises first reception means configured to receive a first plurality of distorted wavelength division multiplex (WDM) channel signals (222, 322); second reception means configured to receive a second plurality of distorted WDM channel signals (221, 321); switching means (205, 206, 605) configured to link a first set (224, 329) of the first plurality of distorted WDM channel signals (222, 322) and a complementary second set (223, 326) of the second plurality of distorted WDM channel signals (221, 321) to a plurality of optical receivers; wherein a first residual set (243, 328) of the first plurality of distorted WDM channel signals (222, 322) comprises one or more of the distorted WDM channel signals not linked to the plurality of optical receivers. The setup further comprises the plurality of optical receivers comprising a corresponding plurality of equalizers configured to compensate the distortions incurred by the first set (224, 329) and the second set (223, 326) using a plurality of parameter sets, respectively; a parameter determination unit (610) configured to determine an estimate of a first residual parameter set specific to a first residual distorted WDM channel signal comprised within the first residual set (243, 328); wherein the switching means (205, 206, 605) are configured to link the first residual set (243, 328) to and to remove the second set (223, 326) from the plurality of optical receivers; and wherein an equalizer of the plurality of equalizers is configured to use the estimate of the first residual parameter set for compensating the distortions incurred by the first residual WDM channel signal.

## Description

The present document relates to optical transmission systems. In particular, the present document relates to systems and methods which enable fast setup of Optical Multiplex Section Protection (OMSP) when using coherent optical detection.

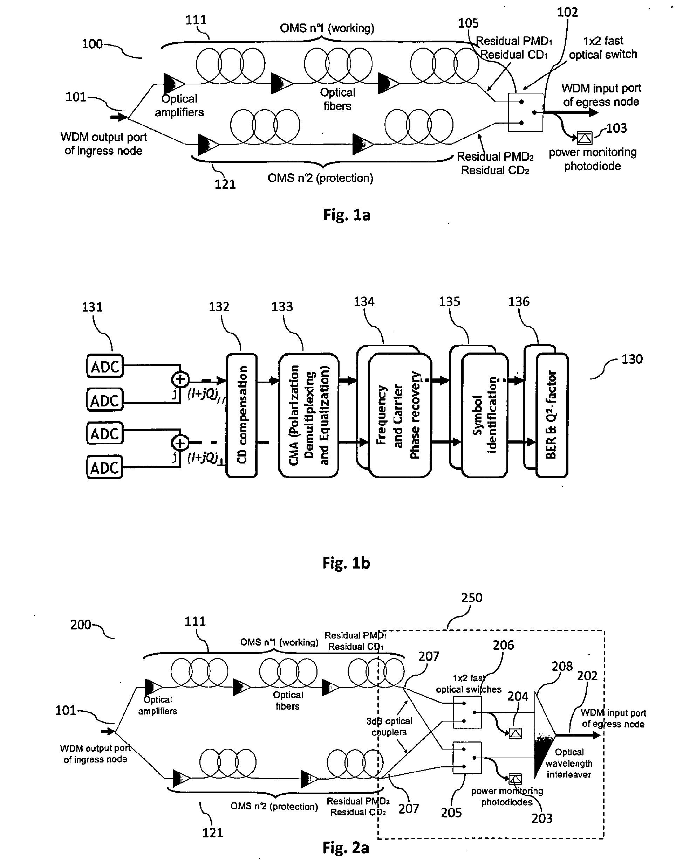

The telecommunications operators are looking for more effective transmission technologies and systems to meet the requirements of their customers for more quality of service. These requirements correspond to various services such as more bandwidth on demand, convergence of wireline and wireless services on the same infrastructure, or minimization of the interruption of service due to failures. The latter property is very challenging because it typically requires very efficient protection processes within the access, the metro and also the core networks. To that aims, the operators are asking for various protection services such as Optical Multiplex Section Protection (OMSP). OMSP protects a whole WDM comb (i.e. a plurality of WDM channels) transported along a given first light-path (called the working path) through the network by doubling this information on a second light-path (called the protection path) linking the same pair of ingress and egress nodes. This is illustrated in Fig. 1a where an optical transmission network 100 comprising a working path 111 and a protection path 121 is illustrated.

The choice between one of these light-paths (also called optical multiplex sections (OMS)) is performed at the common input 102 of the egress node by monitoring the total input optical power. Hence, as soon as the monitoring photodiode 103 detects a signal loss, it triggers the 1x2 switch 105 to receive the signal from the protection line 121. It is noticeable that both light-paths 111, 121 should be totally disjoint to be sure that if one fails, the other one will still be operating properly. The most challenging feature is that the whole recovering time, i.e. the time from detecting a signal loss at the monitoring photodiode 103 to the establishment of the protection path 121, should not exceed a few hundreds of ms (in practice this limit is even smaller than 50 ms in the transmission systems transporting 10 Gb/s or 40 Gb/s channels received with quadratic detection).

Simultaneously, operators want their network to transport more data to improve their return on investment. In view of this, coherent detection at the receiver side may be used to transport 40 Gb/s and 100 Gb/s connections inside existing transparent optical networks over several thousands of km. But such an upgrade to coherent detection may have a detrimental consequence. Since the coherent detection typically requires advanced electronics for post-processing (especially to compensate for linear physical impairments such as accumulated chromatic and polarization mode dispersions), a coherent detection may require a relatively long time to converge before delivering an acceptable bit error rate (BER). Furthermore, additional time may be required for tuning the wavelength of a local oscillator within the coherent receiver to the wavelength of the new protected channel. Typically, the additional time for tuning the wavelength does not exist in case of OMSP because the "working" channel 111 and the "protection" channel 121 use the same wavelength since they are emitted by the same transmitter. Consequently, the convergence time of the compensating algorithms, i.e. the channel equalization algorithms, at the coherent optical receiver may be the main source of delay.

In this context, the time required by a SDH analyzer to recover a connection when it is connected to a real-time coherent receiver experiencing the line switching due to the OSMP process has been determined experimentally. It has been observed that recovery times rank from a few hundreds of ms up to several seconds with 43 Gb/s and 100 Gb/s channels. It was observed that the high recovery times mainly occurred when the residual chromatic dispersion of the "working" line 111 and the "protection" line 121 were significantly different. Such relatively long recovery times do not enable a short enough recovery time required in case of OMSP.

One approach for shortening the recovery times could be to improve the signal processing performance of next generation coherent transponders. However, the present document addresses methods and systems which may be implemented at the systems level in order to reduce the recovery times. In particular, the present document proposes a new OMSP setup to speed up the global recovery time in case of transmission systems using coherent detection.

According to an aspect an optical receiver setup for an OMSP scheme is described. The optical receiver may comprise first reception means configured to receive a first plurality of distorted wavelength division multiplex channel signals, referred to as WDM channel signals. The first plurality of distorted WDM channel signals may correspond to a plurality of WDM channel signals which has incurred distortions during the transmission over a first optical transmission path. In other words, the first plurality of distorted WDM channel signals may be a first WDM signal comprising a plurality of WDM channels which has traversed the first optical transmission path. At the output of the first optical transmission path (e.g. the protection path) a first distorted WDM signal (i.e. a first plurality of WDM channel signals) may be obtained. Typically, the plurality of WDM channel signals has been transmitted using a corresponding plurality of WDM wavelengths. In other words, each WDM channel signal may be transmitted using a corresponding WDM wavelength from a WDM wavelength grid.

The optical receiver setup may comprise second reception means configured to receive a second plurality of distorted WDM channel signals. The second plurality of WDM channel signals may correspond to the plurality of WDM channel signals which has incurred distortions during the transmission over a second optical transmission path, e.g. a working path. In other words, the second reception means may receive a second distorted WDM signal comprising a plurality of WDM channels signals. The distortions incurred within the first and/or second transmission path may be due to chromatic distortion and/or polarization mode dispersion. The first and/or second transmission paths may be optical fibers.

The optical receiver setup may comprise switching means configured to link, in a first mode, a first set of the first plurality of distorted WDM channel signals to a plurality of optical receivers, e.g. optical coherent receivers. Furthermore, the switching means may be configured to link, in the first mode, a complementary second set of the second plurality of distorted WDM channel signals to the plurality of optical receivers. Typically, the first set and the second set of WDM channel signals comprises a number of WDM channels which is equal to and/or which corresponds to the number of optical receivers in the plurality of optical receivers.

The first set and the second set may be complementary with regards to the WDM wavelengths of the WDM channel signals comprised within the first and the second sets. In other words, the first set and the second set may be selected such that the union of the first and second sets makes up a complete WDM signal, i.e. comprises a WDM channel signal for each of the WDM wavelengths. By way of example, the first set may comprise the even WDM channel signals of the first plurality of distorted WDM channel signals and/or the second set may comprise the odd WDM channel signals of the second plurality of distorted WDM channel signals. In another example, the first set comprises no WDM channel signal from the first plurality of WDM channel signals and/or the second set may comprise all the WDM channel signals from the second plurality of WDM channel signals.

The switching means may comprise any one or more of: a one-by-two optical switch, an optical wavelength selective device, an optical interleaver, a 100 GHz / 200GHz interleaver, a 200GHz / 400GHz interleaver, a two-by-two optical switch.

A first residual set of the first plurality of distorted WDM channel signals may comprise one or more of the distorted WDM channel signals not linked to the plurality of optical receivers. In other words, a first residual set may comprise the WDM channel signals from the first plurality of distorted WDM channel signals not comprised within the first set. In a similar manner, a second residual set may comprise the WDM channel signals from the second plurality of distorted WDM channel signals not comprised within the first set.

The optical receiver setup may comprise the plurality of optical receivers, e.g. optical coherent receivers. The plurality of optical receivers may comprise a corresponding plurality of equalizers configured to compensate the distortions incurred by the first set and the second set. Typically each optical receiver comprises an equalizer for compensating one particular WDM channel signal. For this purpose, the plurality of equalizers may use a plurality of parameter sets specific to the distorted WDM channel signals of the first and second sets, respectively. In other words, each equalizer may use a different parameter set for compensating the distortions of a different distorted WDM channel signal.

Overall, the optical receiver setup may be configured to select a first set of distorted WDM channel signals having traversed the first transmission path and a second set of distorted WDM channel signals having traversed the second transmission path. The first and second sets may be linked to respective optical receivers.

The optical receiver setup may comprise a parameter determination unit configured to determine an estimate of a first residual parameter set specific to a first residual distorted WDM signal comprised within the first residual set. In other words, the parameter determination unit may determine an estimate of the first residual parameter set which would be used by the equalizer of an optical receiver in order to compensate the first residual distorted WDM signal comprised within the first residual set. This means that the optical receiver setup is configured to determine an estimate of a parameter set for the equalization of a WDM channel signal which is not actually connected to one of the optical receivers. This estimate may be used in case of protection switching in order to rapidly initialize one of the optical receivers (receiving the first residual WDM channel signal), and to thereby reduce the switch over times.

As such, the switching means may be configured, in a second mode, to link the first residual set to and to remove the second set from the plurality of optical receivers. As such, the switching means may be configured to perform protection switching. For this purpose, the switching means may comprise a monitoring unit configured to detect that a quality of the second plurality of distorted WDM channel signals is below a predetermined quality threshold. The switching means may be configured to switch to the second mode, subject to determining that the quality is below the predetermined quality threshold. By way of example, the monitoring unit may be a power monitoring photodiode and the quality of the second plurality of distorted WDM channel signals may be an optical power of the second plurality of distorted WDM channel signals.

Subject to switching to the second mode, an equalizer of the plurality of equalizers may be configured to use the estimate of the first residual parameter set for compensating the distortions incurred by the first residual WDM channel signal. In other words, the equalizer may be initialized using the predetermined estimates of the first residual parameter set.

It should be noted that the parameter determination unit may be configured to determine a specific estimate for the parameter sets used for the compensation of all the WDM channel signals comprised within the first residual set. As such, all the equalizers corresponding to the WDM channel signals of the first residual set may be initialized upon switching to the second mode.

As already indicated, the plurality of optical receivers may be a plurality of coherent optical receivers. The plurality of equalizers may be configured to compensate distortions due to chromatic dispersion and/or polarization mode dispersion. In particular, the plurality of equalizers may comprise a plurality of equalization filters, e.g. finite impulse response filters, respectively. In such cases, the plurality of parameter sets may comprise a plurality of sets of filter coefficients of the plurality of equalization filters, respectively.

The parameter determination unit may be configured to determine the estimate of the first residual parameter set based on one or more parameter sets used by the plurality of equalizers for the compensation of corresponding one or more WDM channel signals of the first set. In other words, the estimate of the first residual parameter set may be based on the parameters sets which are used by the plurality of equalizers when operating in the first mode.

In particular, the first set may comprise a lower adjacent WDM channel signal at a WDM wavelength lower than a WDM wavelength of the first residual WDM channel signal. The lower adjacent WDM channel signal may have a WDM wavelength directly adjacent to the WDM wavelength of the first residual WDM channel signal. Alternatively, there may be a certain number of intermediate wavelengths between the lower adjacent WDM channel signal and the first residual WDM channel signal. In addition, the first set may comprise a higher adjacent WDM channel signal at a WDM wavelength higher than the WDM wavelength of the first residual WDM channel signal. There may be a certain number of intermediate wavelengths (possibly zero wavelengths) between the higher adjacent WDM channel signal and the first residual WDM channel signal.

The parameter determination unit may be configured to determine the estimate of the first residual parameter set based on parameter sets used for the compensation of the lower and higher adjacent WDM channel signals. In particular, the parameter determination unit may be configured to determine the estimate of the first residual parameter set based on a weighted average of the parameter sets used for the compensation of the lower and higher adjacent WDM channel signals. The weights may depend on the distance in wavelength of the lower and/or higher adjacent WDM channel signals and the first residual WDM channel signal.

The parameter determination unit may comprise one or more polling optical receivers comprising a polling equalizer. The first residual WDM channel signal may be linked to the polling optical receiver and the polling equalizer may be configured to determine the estimate of the first residual parameter set. In other words, the optical receiver setup may comprise one or more polling optical receivers in addition to the plurality of optical receivers which detect the "working" WDM channel signals from the first and second set. The one or more polling optical receivers may be used to determine the estimate of the first residual parameter set directly on the first residual WDM channel signal. Upon switching to the second mode, this estimate can be used to initialize the appropriate optical receiver from the plurality of optical receivers, thereby reducing the switch over times.

The parameter determination unit may comprise a wavelength tunable optical filter upstream of the polling optical receiver configured to isolate the first residual WDM channel signal. In particular, the filter may be used to attenuate the optical power of WDM channel signals adjacent to the first residual WDM channel signal.

As indicated above, the switching means may comprise a two-by-two optical switch which may be configured, in the first mode, to link the first set and the second set to the plurality of optical receivers and the first residual set to the parameter determination unit. Furthermore, the optical switch may be configured, in the second mode, to link the first set and the first residual set to the plurality of optical receivers.

The first residual set may comprise a plurality of first residual WDM channel signals. In particular, the first residual set may comprise all the WDM channel signals of the first plurality of distorted WDM channel signals. The parameter determination unit may be configured to sequentially and iteratively link the plurality of first residual WDM channel signals to the polling optical receiver and to thereby determine a plurality of estimates of a plurality of first residual parameter sets for the plurality of first residual WDM channel signals, respectively. In other words, the polling optical receiver may be used to determine the estimates for some or all of the WDM channel signals comprised within the first residual sets.

The parameter determination unit may be configured to link a particular first residual WDM channel signal to the polling optical receiver and initialize the polling equalizer with the estimate of the first residual parameter set of the particular first residual WDM channel signal determined in a previous iteration. As such, the convergence time of the polling equalizer can be reduced by initializing the polling equalizer with the estimate of the parameter sets determined in a preceding iteration, e.g. in a directly preceding iteration.

Typically, optical receivers such as optical coherent receivers comprise a local oscillator tuned to the WDM wavelength of the received WDM channel signals. In particular, the polling optical receiver may comprise a polling local oscillator configured to tune its wavelength to the WDM wavelength of the first residual WDM channel signal. Alternatively, the optical receiver setup may be configured to provide an appropriate local oscillator signal to the polling optical receiver. In this case, the polling local oscillator does not require a dedicated polling local oscillator. Typically, the plurality of optical receivers comprises a plurality of local oscillators, respectively. The optical receiver setup may comprise a spatial optical matrix configured to selectively link a local oscillator of the plurality of local oscillators to the polling optical receiver. In particular, the local oscillator signal used by the optical receiver receiving a particular WDM channel signal of the second set may be linked to the polling optical receiver for the determination of an estimate of the parameter set for the corresponding WDM channel signal of the first residual set. The polling optical receiver may use the local oscillator signal to determine the estimate of the first residual parameter set. In particular, the polling optical receiver may overlay the WDM channel signal with the local oscillator signal for the purpose of coherent optical reception.

According to another aspect, a method for performing optical multiplex section protection is described. The method may comprise the step of receiving a first plurality of distorted wavelength division multiplex channel signals, referred to as WDM channel signals. The first plurality of distorted WDM channel signals may correspond to a plurality of WDM channel signals which has incurred distortions during the transmission over a first optical transmission path. The plurality of WDM channel signals may have been transmitted using a corresponding plurality of WDM wavelengths.

The method may further comprise the step of receiving a second plurality of distorted WDM channel signals. The second plurality of WDM channel signals may correspond to the plurality of WDM channel signals which has incurred distortions during the transmission over a second optical transmission path. The method may also comprise the step of linking, in a first mode, a first set of the first plurality of distorted WDM channel signals and a complementary second set of the second plurality of distorted WDM channel signals to a plurality of optical receivers. The first set and the second set may be complementary with regards to the WDM wavelengths of the WDM channel signals comprised within the first and the second sets. Furthermore, a first residual set of the first plurality of distorted WDM channel signals may comprise one or more of the distorted WDM channel signals not linked to the plurality of optical receivers.

The method may proceed in compensating the distortions incurred by the first set and the second set using a plurality of parameter sets specific to the distorted WDM channel signals of the first and second sets, respectively. Furthermore, the method may comprise the step of determining an estimate of a first residual parameter set specific to a first residual distorted WDM channel signal comprised within the first residual set.

Upon detection of a protection switching event, the method may proceed in linking the first residual set to and in removing the second set from the plurality of optical receivers; and in compensating the distortions incurred by the first residual WDM channel signal by using the estimate of the first residual parameter set.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The claimed subject-matter is explained below in an exemplary manner with reference to the accompanying drawings, wherein
Fig. 1a illustrates an example optical transmission system comprising a working and a protection path;
Fig. 1b illustrates an example implementation of an optical coherent receiver;
Fig. 2a shows an example OMSP scheme for an optical transmission system using coherent optical receivers;
Fig. 2b illustrates an example channel assignment used in the OMSP scheme of
Fig. 2a;

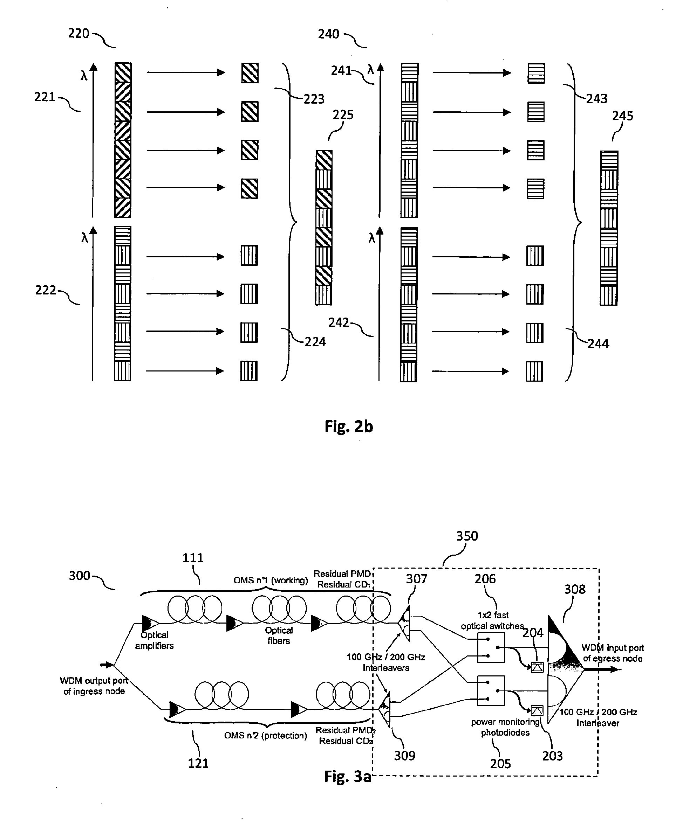

Fig. 3a shows a further example OMSP scheme for an optical transmission system using coherent optical receivers;

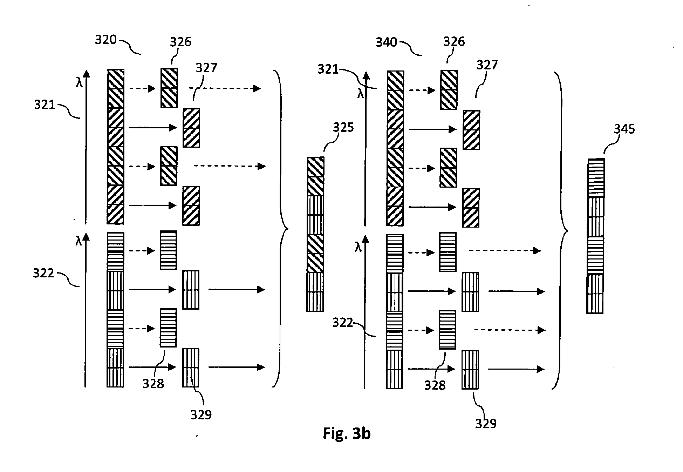

Fig. 3b illustrates an example channel assignment used in the OMSP scheme of
Fig. 3a;

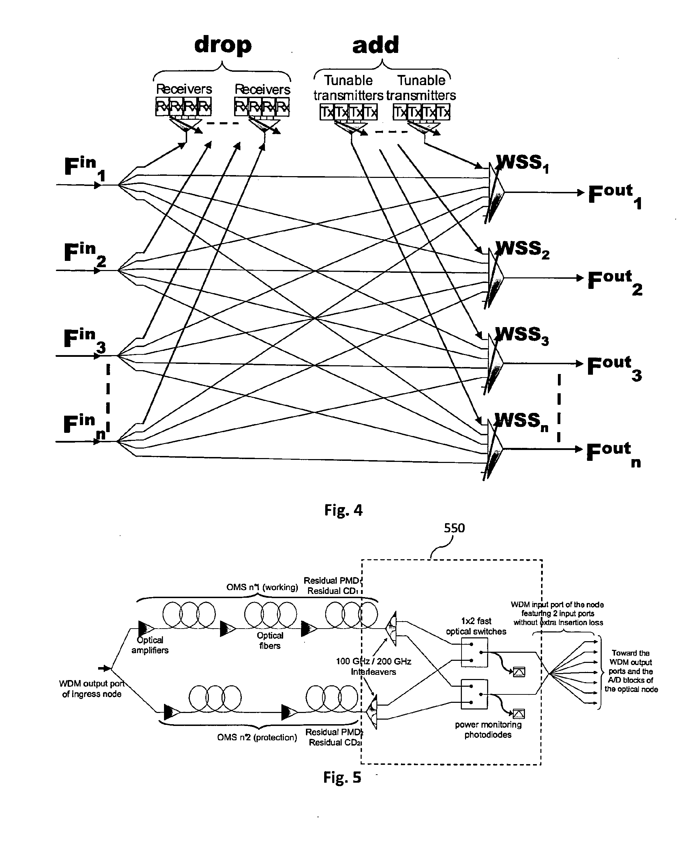

Fig. 4 illustrates an example "broadcasting and select" optical node architecture based on broadcasting optical coupler;
Fig. 5 shows an example use case of the OMSP scheme of Fig. 3a in conjunction with a broadcasting coupler; and

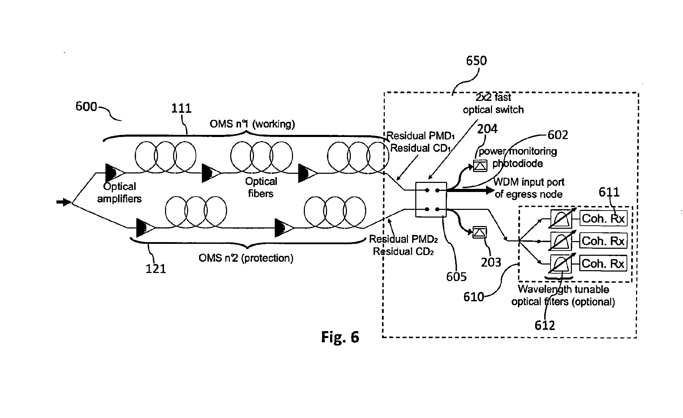

Fig. 6 shows a further example OMSP scheme for an optical transmission system using polling coherent optical receivers.

It has been observed that one of the reasons for the extended recovery times when using coherent detection is that the coherent receiver does not know anything about the new transmission line 121, right after the protection switching caused by a cable failure on the working line 111 has occurred. Consequently, it takes time for the digital signal processing of the coherent detector to converge all the coefficients of its equalization filters so as to compensate effectively for the physical linear degradations of the new transmission line 121.

In order to detect a symbol from a received signal, an optical coherent receiver comprises various stages of digital signal processing. An example digital signal processing 130 is depicted in Fig. 1b for a coherent optical receiver of a polarization multiplexed signal. Chromatic dispersion (CD) and polarization mode dispersion (PMD) compensation 132 follows 4 ADCs (analog-to-digital converters) 131 (corresponding to two sets of ADCs for each polarization). Subsequently, a CMA (constant modulus algorithm) algorithm is used for polarization de-multiplexing and equalization 133. As an outcome, two distinct polarization de-multiplexed signals are obtained. These signals are submitted to frequency and carrier phase estimation and compensation processing 134 in the following. Finally, the compensated signals are passed to symbol identification units 135, where the data samples are detected using the constellation associated with the underlying modulation scheme, e.g. QPSK. The quality of the overall transmission system may be measured using BER (bit error rate) or Q²-factor quality measures (reference sign 136).

Typically, the digital signal processing 130 of a coherent optical receiver requires a certain time to converge to the particular characteristics of an optical transmission channel. This convergence time may be detrimental in the context of protection switching having short recovery times. Therefore, the present document describes methods and systems for reducing the convergence time of optical coherent receivers and for reducing the recovery times of OMSP schemes.

It is possible to measure accurately the residual dispersion along the protection light-path 121; for instance just when establishing the initial connection between the ingress 101 and the egress 102 networks nodes. Hence a possible approach comprises downloading the corresponding parameters directly into the coherent receiver when the line is switched for protection purpose so that the coherent detection process starts with parameters which are already close to the optimized values. This approach assumes that current dispersion values remain similar to the ones initially measured.

However, such an assumption may be false in case of polarization mode dispersion (PMD) because PMD typically evolves unceasingly over large ranges and the assumption may be partly false for the chromatic dispersion (CD) since the evolution of the temperature from night to day but also along the year between the different seasons may cause the final residual chromatic dispersion (RCD) to drift by several hundreds of ps/nm along a light-path covering several thousands ofkm.

Hence despite an initial accurate measurement of the equalization parameters of the protection path 121, there may be a mismatch as compared to the current RCD and/or PMD when the effective protection switching occurs several months or several years after the initial accurate measurements have been made. It should be noted that this mismatch may be particularly impacting super channels modulated a very high data rates (e.g. 200 Gb/s and beyond) because such super channels most likely require chromatic dispersion compensation finer than channels at 43 Gb/s or 100 Gb/s which typically require tuning steps of about a few hundreds of ps/nm. So even if such an uncertainty on the RCD could be considered as tolerable for coherent detection of 112 Gb/s PDM-QPSK channels, the uncertainty on the RCD may be an issue for next-generation modulations schemes such as 130 Gb/s PDM-QPSK featuring soft-decision FEC (forward error correction) and above all 400 Gb/s channels modulated with PDM-16QAM formats.

Due to the above reasons, the accurate pre-measurement of the protection light-path 121 at an initialization stage prior to and separated from the actual protection switching instant may not be sufficient to enable a rapid switch over to the protection line 121.

In view of the above, it is proposed to update the OMSP layout in order to avoid that all the current characteristics of the protection light-path 121 have to be discovered by the coherent detectors just after the switching to the protection light path 121. To that aim, it is proposed to change the current paradigm where all the channels are propagated only over one of the light-paths 111 when the system is transmitting properly. Because of the possible live evolution of the dispersions of the transmission lines, a "live" monitoring of a working light-path 111 is proposed.

As a matter of fact, the coherent detection already is a monitoring device with regards to channel dispersions such as the chromatic dispersion and polarization mode dispersion. In view of this, it is recommended to separate the complete transported WDM comb between 2 disjoint subsets. In other words, it is suggested to split up a WDM transmission system into two disjoint subsets. Furthermore, it is suggested to assign the two disjoint subsets to both available light paths 111 and 121, respectively. As a result, the whole WDM comb containing both WDM subsets is permanently transmitted over the 2 disjoint light-paths.

In normal operating mode, the first subset would be detected from the WDM comb transmitted along the light-path n°1 (e.g. light path 111) while the second subset would be detected from the WDM comb transmitted along the light-path n°2 (e.g. light path 121. In case of failure of one of these light-paths (i.e. one of the light paths 111 or 121), the corresponding subset would be switched to the remaining light-path and detected by the coherent detector of the remaining light-path.

As a consequence of such assignment, it is possible to derive meaningful live information on both light-paths 111, 121 from the coherent detection carried out on channels which are carried by each of the light-paths 111, 121. Hence, when the failure occurs, accurate knowledge about the parameters for the digital signal processing of the coherent detectors is available. This knowledge may be used to update the electronic processing of the transponders that have been switched. Therefore, the convergence time of the coherent detectors may be reduced.

It should be noted that the above approach is particularly relevant for physical parameters for which a correlation exists between the successive wavelengths making up the WDM comb. Chromatic dispersion has such a correlation property because from the knowledge of the global chromatic dispersion experienced by a given channel, the RCD incurred in its adjacent channels may be derived (provided that the adjacent channels follow the same light-path through the optical network). Consequently, the approach described above, is particularly applicable for an OMSP scheme where all the channels of a WDM comb have the same source and destination network nodes and/or the same intermediate network nodes. For instance, the methods and systems described herein are particular useful in the context of submarine network applications.

Fig. 2a shows an example implementation of the proposed OMSP scheme comprising an overall optical receiver setup 250. Fig. 2a illustrates a network scenario 200 where all the optical WDM channels originate from a single WDM output port 101 (of the ingress node) and the WDM channels arrive at a single WDM input port 202 (of the egress node). The transmitting side connected to the ingress node at port 201 is unchanged compared to the setup shown in Fig. 1. However, on the receiving side the outgoing WDM comb is power split 207, e.g. by means of 3dB power couplers, towards two different 1x2 optical switches 205, 206. Each of the two switches 205, 206 selects the optical multiplex section (OMS) that accesses the corresponding input port of the wavelength selective device 208. In other words, the two switches 205, 206 select one of the two subsets of the WDM comb, respectively and pass the selected subset to the wavelength selective device 208.

The wavelength selective device 208 multiplexes the two disjoint subsets of wavelengths of the WDM comb (each of them received at one specific input port) toward its single input port 202. By way of example, the wavelength selective device 208 may be a passive optical interleaver operating, for instance, on the 100 GHz grid on the input side and on the 50 GHz grid on the output side. Alternatively, the wavelength selective device 208 may be an active component such as a reconfigurable wavelength selective switch.

It can be seen from Fig. 2a that a specific monitoring photodiode 203, 204 is used for each input port of the wavelength selective device 208. Thus, in case of cable failure, the power loss is quickly detected by the photodiode 203, 204 following the switch 205, 206 that was traversed by the signals coming from the failing OMS (i.e. either path 111 or 121). This photodiode 203, 204 can then drive the corresponding optical switch to switch toward the other OMS 111, 121.

Simultaneously, when the protection is triggered, a reset signal may be sent to the coherent receivers that were receiving signals from the failing OMS 111, 121. Hence the coherent receivers may be informed that subsequent to the switch over to the respective protecting path 111, 121, the coherent receiver will receive the same WDM channels, however, from another OMS 111, 121 with different physical parameters which need to be compensated.

The assignment of the WDM channels is illustrated schematically in Fig. 2b. On the left side of Fig. 2b, the situation 220 prior to protection switching is illustrated. The WDM comb 221 of the "working" path 111 is linked by switch 206 to the input port of the wavelength selective device 208. The wavelength selective device 208 selects the odd WDM channels 223 from the WDM comb 221 and assigns them to the odd WDM channels of the WDM comb 225 which is passed to the input port 202 of the egress node. In a similar manner, the WDM comb 222 or WDM signal 222 of the "protection" path 121 is linked by switch 205 to the input port of the wavelength selective device 208. The wavelength selective device 208 selects the even WDM channels 224 or WDM channel signals 224 from the WDM comb 221 and assigns them to the even WDM channels of the WDM comb 225 which is passed to the input port 202 of the egress node. It can be seen that a part of the WDM channels which are passed to the coherent optical receivers downstream of the egress node have been transmitted via the "working" path 111 and the other part has been transmitted via the "protection" path 121. Consequently, the coherent optical receivers are provided with information regarding both paths 111, 121.

The right side of Fig. 2b illustrates the situation 240 after protection switching. As a result of protection switching, switch 206 has linked the "protection" path 121 to the input port of the wavelength selective device 208. Just as before, the wavelength selective device 208 selects the odd WDM channels 243 from the WDM comb 241 and assigns them to the odd WDM channels of the WDM comb 245 which is passed to the input port 202 of the egress node. The situation regarding the even WDM channels remains unchanged. The WDM comb 242 of the "protection" path 121 is still linked by switch 205 to the input port of the wavelength selective device 208. Just as before, the wavelength selective device 208 selects the even WDM channels 244 from the WDM comb 241 and assigns them to the even WDM channels of the WDM comb 245 which is passed to the input port 202 of the egress node. It can be seen that after protection switching, the WDM channels of WDM comb 245 correspond to the WDM channels of the WDM 222 transmitted over the "protection" path 121.

It can also be seen that after protection switching, the even WDM channels of WDM comb 245 are different from the even WDM channels of WDM comb 225 prior to protection switching. As a consequence, the optical coherent receivers of the even WDM channels need to converge to the new even WDM channels (transmitted over the "protection" path 121). In order to reduce the convergence time, it is proposed to appropriately initialize the affected optical coherent receivers.

In order to initialize the affected coherent receivers and to thereby speed up the convergence process the parameters of the nearest (in terms of wavelength vicinity) channels that were already transmitted via the non-failing OMS 111, 121, may be download into the corresponding registers of the affected coherent receivers. In other words, a coherent receiver which has received a WDM channel which was transmitted over the failing OMS 111, 121 may be initialized by the corresponding parameters of the coherent receiver which receives the nearest WDM channel (in terms of wavelength vicinity) that is transmitted on the non failing OMS 111, 121.

By selecting the settings of the coherent receiver which is involved in the protection switching the correlation between the residual chromatic dispersion undergone by the adjacent channel from which the settings are downloaded may ensure that from the beginning of the convergence process the settings are relatively close to the converged (optimal) settings. As a consequence, the convergence time of the coherent receiver may be reduced.

There are several possibilities on how to determine the settings of the coherent receiver from its neighbouring coherent receivers which have properly converged to their corresponding optical transmission channel. By way of example, the settings or parameters of the closest adjacent channel having a smaller wavelength than the non-converged coherent receiver may be selected. Alternatively, the settings or parameters of the closest adjacent channel having a higher wavelength than the non-converged coherent receiver may be selected. In a further example, a weighted average of the parameters or setting of the two closest neighbour channels may be selected. The weights may be proportional to the spectral spacing of the respective neighbour channel and the current switched channel.

As mentioned in the previous paragraphs, a more accurate "live" knowledge of the features or characteristics of the two possible light-paths 111, 121 involved in the OMSP scheme may allow for shorter recovery times. For this purpose, the corresponding relevant information on the characteristics of the protection light path should be downloaded rapidly inside the electronic processor of a coherent receiver undergoing a protection event.

It should be noted that the setup shown in Fig. 2a may increase the total insertion loss of an optical link by about 6.5 dB as compared to the setup of Fig. 1. Such additional insertion loss may be due to the use of additional 3dB couplers 205, 206, which may lead to an additional 3.5 dB insertion loss. Furthermore, the additional insertion loss may be due to the use of an interleaver 208, which may lead to a 3 dB insertion loss. The additional insertion loss may be compensated by additional power amplification at the end of the transmission link. It should also be noted that the interleaver 208 may narrow the global pass-band experienced by the WDM channels.

The above mentioned potential drawbacks with regards to insertion loss and/or passband width may be mitigated using a setup 300 as shown in Fig. 3a comprising an overall optical receiver setup 350. Instead of separating the even and odd WDM channels aligned on the 50 GHz ITU-T grid by means of a 50GHz/100 GHz interleaver 208, groups of 2 or 4 channels may be separated. This can be done by means of a 100 GHz/200 GHz interleaver or 200GHz/400GHz interleaver 308. Such interleavers 307, 309 may also be used to replace the 3dB couplers 207, in order to appropriately generate groups of 2 or four channels from the WDM combs received on the working path 111 and the protection path 121, respectively. The insertion loss of such 100 GHz/200 GHz interleavers or 200GHz/400GHz interleavers 307, 308, 309 is typically up to 1 dB smaller than the one of a 50 GHz/100GHz interleaver 208 and/or 3dB couplers 207. Therefore, the setup 300 of Fig. 3a may reduce the extra insertion loss down to 4 dB instead of more than 6 dB in setup 200 illustrated in Fig. 2a.

An example assignment of WDM channels according to the scheme of Fig. 3a is illustrated in Fig. 3b. On the left side, the situation 320 prior to protection switching is illustrated. The WDM comb 321 is split up into two interleaved sets 326, 327 of groups comprising two WDM channels. The first set 326 is linked by switch 206 to the input port of the wavelength selective device 308 (indicated by the dotted arrows which reflect the switching of switch 206). The second set 327 is linked to switch 205 (indicated by the solid arrows). During normal operation, the second set 327 is not linked to the wavelength selective device 308.

In a similar manner, the WDM comb 322 which has been transmitted via the "protection" path 121 is split up into two interleaved sets 328, 329 of groups comprising two WDM channels. The first set 328 is linked to switch 206, however, not linked to the wavelength selective device 308. The second set 329 is linked to switch 205 and linked to the wavelength selective device 308.

As such, the wavelength selective device 308 provides a WDM comb 325 which comprises WDM channels from the first set 326 of WDM comb 321 (having traversed the "working" path) and from the second set 329 of WDM comb 322 (having traversed the "protection" path).

The right side of Fig. 3b illustrates the situation 340 after protection switching. It can be seen that in this case, the switches 206, 205 have been switched such that the wavelength selective device 308 provides a WDM comb 345 comprising the first set 328 and the second set 329 of WDM comb 322 (having traversed the "protection" path). It can also be seen that instead of the first set 326 of WDM comb 321, the first set 328 of WDM comb 322 is passed to the optical coherent receivers. As a consequence, these optical coherent receivers will have to converge to the new channel conditions (i.e. the channel conditions of the corresponding WDM channels on the "protection" path 121).

In should be noted that in view of the fact that the WDM channels are selected from both paths 111, 121 by groups of 2 or 4 adjacent channels (instead of being selected one by one), the settings of a non-converged coherent receiver may need to be determined from neighbouring channels which are not directly adjacent, but which are next to the directly adjacent or spaced by a certain number of channels from the directly adjacent. The number of channels of the spacing depends on the size of the groups (one intermediate channel in case of 100 GHz/200 GHz interleavers, spaced at 100GHz, or three intermediate channels in case of 200 GHz/400GHz interleavers, spaced at 200 GHz).

It is also possible to further reduce by 2 dB the extra insertion loss in the frame by replacing the wavelength selective device 308 and the subsequent egress node of Fig. 3a by a 2 x N coupler. Fig. 4 illustrates the node architecture featuring a 1xN coupler at its WDM input ports. Such 1xN coupler is typically used to broadcast the incoming WDM signals from the different WDM input ports towards the different WDM output ports and the different Add/Drop blocks. Instead of these 1xN couplers it is proposed to use 2xN couplers. The insertion loss of a 1xN coupler and a 2xN coupler is equal and the 2 input ports of the 2xN couplers could be used to connect the 2 optical fast switches 205, 206 as shown in Fig. 5 showing the overall optical receiver setup 550. Hence, the insertion loss due to the rightmost multiplexer 208, 308 appearing in Fig. 2a and Fig. 3a may be avoided.

In the above example, methods and systems have been described which provide initial settings to non-converged coherent receivers based on the settings of adjacent converged coherent receivers. These methods are particularly useful in the context of compensating chromatic dispersion (CD), as CD for adjacent wavelengths is highly correlated. On the other hand, it has been observed that the correlation between Polarization Mode Dispersion (PMD) for adjacent wavelengths may be relatively low. Consequently, the initialization of a non-converged coherent receiver with the settings of the PMD equalizer of an adjacent WDM channel may not speed up the convergence.

In view of the above, a further approach for estimating the initial settings of a non-converged coherent receiver is described. In order to determine the relevant information for compensating the Chromatic Dispersion (CD) and also the PMD of a non-converged coherent receiver, the measurement of the relevant information could be done at the wavelength corresponding to the receiver (Rx) that is going to use this information in case of failure. By determining initial estimates of the settings of the non-converged coherent receiver directly using the wavelength of the coherent receiver, the above mentioned correlation issues of CD and/or PMD with regards to adjacent wavelengths can be avoided.

In order to determine appropriate initial estimates, it is proposed to implement wavelength polling on the protection light-path 121 before its effective utilization. An example implementation of wavelength polling is illustrated in Fig. 6. The OMSP setup 600 comprises a working path 111 and a protection path 121 and an overall optical receiver setup 650. Both paths are connected to a 2x2 switch 605, which is configured to link the working path 111 to the input port 602 of the egress node. The switch 605 is further configured to link the protection path 121 to a wavelength polling unit 610. In case of a drop in optical power detected by the photodiode 204, the switch 605 links the protection path 121 to the input port 602 of the egress node. Furthermore, the switch 605 may link the formerly working path 111 to the wavelength polling unit 610.

It should be noted that the insertion loss of a 2 x 2 switch 605 is typically the same as the insertion loss of a 1 x 2 switch 102. Consequently, the setup 600 of Fig. 6 does not induce any additional insertion loss compared to the standard OMSP setup 100 of Fig. 1.

In normal operation mode, the 2x2 optical switch 605 is configured to send the optical channels outgoing from the "working" OMS 111 to the set of detecting coherent receivers (via the input port 602 of the egress node). The channels outgoing from the "protection" OMS 121 are steered toward the wavelength polling unit 610. The wavelength polling unit 610 may comprise one or more polling receivers (Rxs) 611. These Rxs 611 detect successively the channels of the "protection" OMS 121 and thereby determine the coefficients of the compensating filter that yield a correct bit error rate. In other words, a polling receiver 611 may be used to determine the parameter settings for a particular WDM channel of the "protection" OMS 121. Once the parameter settings have been determined, i.e. once the polling receiver 611 has converged, the parameter settings may be stored and the polling receiver 611 may be tuned to another WDM channel in order to determine the parameters settings for the another WDM channel. As such, the parameter settings of the channels of the "protection" path 605 may be determined in a sequential manner using one or more polling receivers 611.

Once parameter settings of the coherent receiver for a particular WDM channel have been determined, the parameter settings may be downloaded to the coherent Rx operating at the same wavelength in the working set 111. For this purpose, the coherent receiver working on the working path 111 may comprise memory for storing the parameter settings of the protection path 121. In case of failure of the working path 111, the 2x2 switch 605 changes its switching state so that the set of coherent receivers downstream of the input port 602 of the egress node are linked to the channels outgoing from the "protection" OMS 121. In order to speed up the convergence time of the optical receivers to the channel conditions of the channels of the "protection" OMS 121, the coherent receivers use the parameter settings, i.e. the filter coefficients, which have been downloaded in their memory from the polling receiver(s) 611.

The one or more polling receivers 611 may sequentially and in a cyclic, iterative manner determine the parameter settings for the channels of the "protection" OMS 121. After having been determined, the parameter settings are stored in the memory of the corresponding coherent receiver or in a central memory of the overall optical receiver 650. After each cycle through the wavelengths of the WDM comb, the one or more polling receivers 611 begin a new cycle for the determination of the parameter settings. Consequently, the parameter settings of the optical receivers are refreshed in a periodic manner.

In this context, the refreshing time of the parameter settings, i.e. of the filter coefficients, may be adapted. In order to provide good initial estimates for the compensation of CD and/or PMD, the stored parameter setting should be up to date. This means that the last measurement for each channel of the "protection" OMS 121 should be relatively recent (typically in the range of a few minutes), under the assumption that the polarization state is likely to remain constant over several minutes. In order to reach shorter refreshing time, several polling coherent receivers 611 may be used in parallel as illustrated in Fig. 6. In this case, each polling coherent receiver 611 scans a subset of the total WDM transmission window and so the overall scanning duration is reduced. Nevertheless, the number of polling coherent receivers 611 may be kept small as compared to the total number of channels transmitted, thereby reducing the cost of the OMSP scheme. By way of example, 5 polling coherent receivers may be used for 96 working channels. This means that each coherent receiver 611 scans up to 20 channels. If it is targeted to refresh the parameter setting of a working coherent receiver every 3 minutes, the measurement of the PMD and CD compensation parameters of each channel should not take more than 180/20=9 seconds. It is noteworthy that this measurement duration should also account for the tuning time of the wavelength of the local oscillator of the polling coherent receiver 611 and for the tuning time of the wavelength-tunable filter 612. It should be noted that the use of a wavelength-tunable filter 612 is not mandatory but it could contribute to speed up the measurement, as it could be used to reduce the power of adjacent WDM channels by isolating the WDM channel which is to be measured.

Measurement times of a few seconds may be challenging, in view of the fact that the polling coherent receiver 611 may take a few seconds to converge to the to-be-measured "protection" channel. However, in view of the fact that the polling coherent receiver 611 regularly measures the same channels (e.g. every 3 minutes), the polling coherent receiver 611 could download the last filter coefficients corresponding to the to-be-measured channel prior to performing the update measurement. As outlined above, the probability that these coefficients have significantly evolved since the last measurement is rather low. Consequently, a faster convergence to the updated coefficients can be expected.

Furthermore, in order to reduce the time to tune the wavelength of the local oscillator, the polling coherent receiver 611 may obtain information on the wavelength of the local oscillator directly from the local oscillators of the respective coherent receiver operating in the working part 111. For instance, if the system transports up to 96 channels and uses up to 5 polling coherent receivers 611, a 96x5 optical spatial switching matrix or five 20x1 optical spatial switching matrices may be used so that each polling coherent receiver 611 can receive successively as local oscillator the wavelength corresponding to the subset of channels it has to poll. In this latter case, the tuning time may be reduced to a few tenths of ms, i.e. to the time required for switching the spatial switching matrix to the respective optical receiver. In other words, it is proposed to direct the local oscillator signal from the working optical receiver of a particular working WDM channel to the polling optical receiver during the measurement of the corresponding protection WDM channel. As such, the polling optical receiver does not require a local oscillator.

By reducing the overall measurement time, it may be possible to reduce the number of polling coherent receivers 611 and thereby to reduce the cost of the OMSP scheme. Alternatively or in addition, the refreshing time may be reduced, thereby improving the switch over times of the OMSP scheme.

In the present document methods and systems for OMSP of optical WDM systems using coherent optical receivers have been described. The described methods and systems allow for a fast switch over from a working path to a protection path of the WDM system, thereby paving the way toward OMSP with low recovery times of less than 300ms. This is particular relevant for optical submarine transmission systems.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An optical receiver setup (250, 350, 550, 650) comprising
- first reception means configured to receive a first plurality of distorted wavelength division multiplex channel signals (222, 322), referred to as WDM channel signals; wherein the first plurality of distorted WDM channel signals (222, 322) corresponds to a plurality of WDM channel signals which has incurred distortions during the transmission over a first optical transmission path (121); wherein the plurality of WDM channel signals has been transmitted using a corresponding plurality of WDM wavelengths;
- second reception means configured to receive a second plurality of distorted WDM channel signals (221, 321); wherein the second plurality of WDM channel signals (221, 321) corresponds to the plurality of WDM channel signals which has incurred distortions during the transmission over a second optical transmission path (111);
- switching means (205, 206, 605) configured to link, in a first mode, a first set (224, 329) of the first plurality of distorted WDM channel signals (222, 322) and a complementary second set (223, 326) of the second plurality of distorted WDM channel signals (221, 321) to a plurality of optical receivers; wherein the first set (224, 329) and the second set (223, 326) are complementary with regards to the WDM wavelengths of the WDM channel signals comprised within the first (224, 329) and the second (223, 326) sets; wherein a first residual set (243, 328) of the first plurality of distorted WDM channel signals (222, 322) comprises one or more of the distorted WDM channel signals not linked to the plurality of optical receivers;
- the plurality of optical receivers comprising a corresponding plurality of equalizers configured to partly compensate the distortions incurred by the first set (224, 329) and the second set (223, 326) using a plurality of parameter sets specific to the distorted WDM channel signals of the first (224, 329) and second (223, 326) sets, respectively;
- a parameter determination unit (610) configured to determine an estimate of a first residual parameter set specific to a first residual distorted WDM channel signal comprised within the first residual set (243, 328);
wherein the switching means (205, 206, 605) are configured, in a second mode, to link the first residual set (243, 328) to the plurality of optical receivers, and to remove the second set (223, 326) from the plurality of optical receivers; and
wherein an equalizer of the plurality of equalizers is configured to use the estimate of the first residual parameter set for compensating the distortions incurred by the first residual WDM channel signal.

2. The optical receiver setup (250, 350, 550, 650) of claim 1, wherein the switching means (205, 206, 605)
- comprise a monitoring unit (203, 204) configured to detect that a quality of the second plurality of distorted WDM channel signals (221, 321) is below a predetermined quality threshold;
- are configured to switch to the second mode, subject to determining that the quality is below the predetermined quality threshold.

3. The optical receiver setup (250, 350, 550, 650) of claim 2, wherein
- the monitoring unit (203, 204) is a power monitoring photodiode; and
- the quality of the second plurality of distorted WDM channel signals (221, 321) is an optical power of the second plurality of distorted WDM channel signals (221, 321).

4. The optical receiver setup (250, 350, 550, 650) of any previous claim, wherein
- the plurality of optical receivers is a plurality of coherent optical receivers; and
- the plurality of equalizers are configured to compensate chromatic dispersion and/or polarization mode dispersion.

5. The optical receiver setup (250, 350, 550, 650) of any previous claim, wherein
- the plurality of equalizers comprises a plurality of equalization filters, respectively; and
- the plurality of parameter sets comprises a plurality of sets of filter coefficients of the plurality of equalization filters, respectively.

6. The optical receiver setup (250, 350, 550, 650) of any previous claim, wherein the parameter determination unit (610) is configured to determine the estimate of the first residual parameter set based on one or more parameter sets used by the plurality of equalizers for the compensation of corresponding one or more WDM channel signals of the first set (224, 329).

7. The optical receiver setup (250, 350, 550, 650) of claim 6, wherein
- the first set (224, 329) comprises a lower adjacent WDM channel signal at a WDM wavelength lower than a WDM wavelength of the first residual WDM channel signal;
- the first set (224, 329) comprises a higher adjacent WDM channel signal at a WDM wavelength higher than the WDM wavelength of the first residual WDM channel signal; and
- the parameter determination unit (610) is configured to determine the estimate of the first residual parameter set based on parameter sets used for the compensation of the lower and higher adjacent WDM channel signals.

8. The optical receiver setup (250, 350, 550, 650) of claim 7, wherein
- the parameter determination unit (610) is configured to determine the estimate of the first residual parameter set based on a weighted average of the parameter sets used for the compensation of the lower and higher adjacent WDM channel signals.

9. The optical receiver setup (250, 350, 550, 650) of any previous claim, wherein
- the parameter determination unit (610) comprises a polling optical receiver (611) comprising a polling equalizer;
- the parameter determination unit (610) is configured to link the first residual WDM channel signal to the polling optical receiver (611); and
- the polling equalizer is configured to determine the estimate of the first residual parameter set.

10. The optical receiver setup (250, 350, 550, 650) of claim 9, wherein
― the parameter determination unit (610) comprises a wavelength tunable optical filter (612) upstream of the polling optical receiver (611) configured to isolate the first residual WDM channel signal.

11. The optical receiver setup (250, 350, 550, 650) of any of claims 9 to 10,
wherein the switching means (205, 206, 605) comprises a two-by-two optical switch configured,
- in the first mode, to link the first set and the second set to the plurality of optical receivers and the first residual set to the parameter determination unit (610); and
- in the second mode, to link the first set and the first residual set to the plurality of optical receivers.

12. The optical receiver setup (250, 350, 550, 650) of any of claims 9 to 11,
wherein
- the first residual set (243, 328) comprises a plurality of first residual WDM channel signals;
- the parameter determination unit (610) is configured to sequentially and iteratively link the plurality of first residual WDM channel signals to the polling optical receiver (611) and to thereby determine a plurality of estimates of a plurality of first residual parameter sets for the plurality of first residual WDM channel signals, respectively.

13. The optical receiver setup (250, 350, 550, 650) of claim 12, wherein the parameter determination unit (610) is configured to
- link a particular first residual WDM channel signal to the polling optical receiver (611); and
- initialize the polling equalizer with the estimate of the first residual parameter set of the particular first residual WDM channel signal determined in a previous iteration.

14. The optical receiver setup (250, 350, 550, 650) of any of claims 9 to 13,
wherein
- the polling optical receiver (611) comprises a polling local oscillator configured to tune its wavelength to the WDM wavelength of the first residual WDM channel signal.

15. The optical receiver setup (250, 350, 550, 650) of any of claims 9 to 13,
wherein
- the plurality of optical receivers comprises a plurality of local oscillators, respectively;
- the optical receiver setup (250, 350, 550, 650) comprises a spatial optical matrix configured to selectively link a local oscillator of the plurality of local oscillators to the polling optical receiver (611); and
- the polling optical receiver (611) uses the local oscillator signal to determine the estimate of the first residual parameter set.
